# EUROPÄISCHE PATENTANMELDUNG

(11) **EP 1 091 105 A1**
(43) Veröffentlichungstag der Anmeldung: **11.04.2001**
(21) Anmeldenummer: 00119082.6
(22) Anmeldetag: 02.09.2000
(51) Int. Cl.: F02B 27/02

(54) **Ansaugvorrichtung**

(30) Priorität: 08.10.1999 DE 19948660
(71) Anmelder: Filterwerk Mann & Hummel GmbH, 71638 Ludwigsburg (DE)
(72) Erfinder: Fischer, Christian, Dr., 70736 Fellbach (DE)
(74) Vertreter: Voth, Gerhard, Dipl.-Ing.

(57) **Zusammenfassung**

Die erfindungsgemäße Ansaugvorrichtung 10 insbesondere für eine Brennkraftmaschine ermöglicht durch eine einfache Geometrie die Realisierung längerer Ansaugrohre und bewirkt eine direkte Luftführung ohne scharfe Umlenkungen. Die Ansaugvorrichtung umfaßt einen Sammelbehälter 11, Ansaugrohre 12 und eine Verstelleinheit 13. Der Sammelbehälter 11 und die Verstelleinheit 13 bilden Ansaugkanäle 14, die jeweils in ein Ansaugrohr münden. Die Ansaugkanäle 14 sind 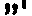 kleeblattförmig" um die Verstelleinheit 13 angeordnet. Um eine optimale Aufladung der Zylinder einer Brennkraftmaschine bei allen Drehzahlbereichen zu erzielen, ist die Verstelleinheit 13 stufenlos verschiebbar eingebracht. Zur Fixierung von bevorzugten Einstellungen können Dreh- oder Schiebehülsen mit Ausbrüchen in die Ansaugvorrichtung integriert sein.

## Beschreibung

Die Erfindung betrifft eine Ansaugvorrichtung nach dem Oberbegriff des Patentanspruches 1.

### Stand der Technik

Es ist aus der DE 36 08 310 eine Vorrichtung zur stufenlosen Veränderung der Länge des Luftansaugrohres einer Brennkraftmaschine bekannt. Die Vorrichtung umfaßt ein feststehendes als Sammelrohr dienendes Gehäuse, in dem ein hohlzylindrischer Drehkörper drehbar angeordnet ist, dessen Innenraum mit dem Luftansaugrohr über eine Verbindungsöffnung verbunden ist. Zwischen dem Mantel des Drehkörpers und der Innenwand des Gehäuses in radialer Richtung und zwischen den Dichtwänden in axialer Richtung werden voneinander abgetrennte Strömungskanäle begrenzt, deren wirksame Länge durch die Drehlage einer Auslaßöffnung in der Drehkörperwand bestimmt wird, die zum Innenraum des Drehkörpers führt. Andererseits mündet jeder Strömungskanal in einer Einlaßöffnung eines zu jedem Zylinder der Brennkraftmaschine führenden Ansaugkanals. Durch Verdrehen des Drehkörpers kann die wirksame Länge jedes Strömungskanals in Abhängigkeit von der Drehzahl der Brennkraftmaschine bei Vollast geändert werden.

Bei dieser Vorrichtung ist jedoch die Ansaugkanallänge durch den maximal möglichen Drehkörperumfang begrenzt. Außerdem wird das Fluid beim Austritt aus dem Drehkörper extrem umgelenkt.

Aufgabe der Erfindung ist es, eine Ansaugvorrichtung mit großen Ansaugkanallängen und möglichst geringen Umlenkungen zu ermöglichen.

Diese Aufgabe wird durch die Merkmale des Patentanspruches 1 gelöst.

### Vorteile der Erfindung

Die erfindungsgemäße Ansaugvorrichtung ist in vorteilhafter Weise geeignet, große Ansaugkanallängen bei geringen Umlenkungen des Ansaugmediums zu realisieren und dieses einer Brennkraftmaschine zuzuführen.

Die Ansaugvorrichtung umfaßt einen Sammelbehälter, der einen Sammelraum umschließt und einen Teil der Ansaugkanäle bildet. In diesen Sammelbehälter ragt eine Verstelleinheit hinein, die in den dafür vorgesehenen Führungen gelagert ist und gemeinsam mit dem Sammelbehälter die Ansaugkanäle bildet. Die Verstelleinheit ist ausreichend dicht in dem Sammelbehälter gelagert, so daß die einzelnen Ansaugkanäle getrennt sind. Die Abtrennung der Kanäle voneinander kann durch Ineinandergreifen des Sammelbehälters mit der Verstelleinheit erfolgen. Jeder Ansaugkanal, hierunter ist der verstellbare Bereich zu verstehen, ist jeweils mit einem Ansaugrohr, welches eine nicht veränderliche Läge aufweist, verbunden. Das Ansaugrohr mündet in einen Zylinder der Brennkraftmaschine. Der Sammelbehälter, die Verstelleinheit und der Ansaugkanal sind achsparallel angeordnet. Da die Ansaugvorrichtung in unterschiedlichen Einbauräumen einbringbar sein soll, kann sie verschiedensten Raumkurven folgen, wobei die Raumkurven der Ansaugkanäle und der Verstelleinheit parallel verlaufen. Die Verstelleinheit einer geraden Ausführung kann aus einem starren Material bestehen. Bei gekrümmten Ausführungen ist die Verstelleinheit zur Gewährleistung der Montage entweder in flexiblem evtl. mit Festkörpereinlagen versehenem Material oder starrem Material mit flexiblen Einsätzen auszuführen. Bei besonderen Ausführungen kann es erforderlich sein, eine mehrteilige Verstelleinheit oder mehrere Verstelleinheiten einzuführen, um Montage und Funktion zu gewährleisten oder bestimmte Effekte zu erzielen. Der Sammelbehälter kann als Kunststoffblasteil oder bei komplizierten Formen auch im Kernausschmelzverfahren hergestellt sein.

Gemäß einer besonderen Ausführungsform weist die Verstelleinheit Bereiche auf, in welchen sie eine Kontaktfläche mit dem Sammelbehälter bildet. Die Verstelleinheit ist so angeordnet, daß sie relativ zum Sammelbehälter verschiebbar ist. Bei einer Bewegung der Verstelleinheit in das Innere des Sammelbehälters, verringert sich der Sammelraum und die Kanallänge verlängert sich. Durch Verschieben der Verstelleinheit in die entgegengesetzte Richtung wird der Sammelraum im Sammelbehälter vergrößert und dadurch die Ansaugkanallänge verringert. Der Sammelbehälter ist in seinem Außenvolumen konstant. Die Ansaugkanallänge ist somit variabel und kann auf den jeweiligen Betriebszustand der Brennkraftmaschine eingestellt werden. Um bevorzugte Einstellungen, z.B. für bestimmte Drehzahlen, exakt zu fixieren, können Dreh- oder Schiebehülsen vorgesehen sein, die Ausbrüche aufweisen, welche die Verstelleinheit an der gewünschten Stellung fixieren.

Gemäß einer weiteren Ausgestaltung der Erfindung kann die Verstelleinheit translatorisch verschoben werden. Bei dieser Ausführung wird die Verstelleinheit in Achsrichtung aus dem Sammelbehälter um eine bestimmte Länge herausgezogen, um diesen Betrag verkürzt sich dann die Ansaugkanallänge und der Sammelraum vergrößert sich. Beim Hineinschieben der Verstelleinheit in den Sammelbehälter verlängert sich die Ansaugkanallänge um den eingeschobenen Betrag.

Eine vorteilhafte Ausbildung des Erfindungsgedankens ist die 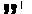 kleeblattförmige" Anordnung der Ansaugkanäle um die Verstelleinheit, die eine gleichmäßige Druckverteilung im Sammelbehälter bewirkt. Bei dieser Anordnung ist eine kompakte Bauweise möglich, da die Wand eines Ansaugkanals zum Teil auch die Wand des anschließenden Ansaugkanals bildet.

Es ist vorteilhaft, die Verstelleinheit aus beweglich miteinander verbundenen Segmenten zu bilden, dadurch kann die Verstelleinheit, nachdem sie aus dem Sammelbehälter gezogen wurde, umgelenkt oder aufgewickelt werden. Hierzu können insbesondere Federn als Verbindungselemente dienen, deren Federrate einzeln, entsprechend den Anforderungen, variiert werden kann. Eine weitere Möglichkeit, die Segmente zu verbinden, besteht in der Verwendung von flexiblen Kunststoffen, insbesondere Elastomeren oder mechanischen Gelenken wie Kugelgelenken.

Eine weitere Ausbildung der Erfindung sieht die Verwendung einer Verstelleinheit vor, die größtenteils in dem Sammelbehälter verbleibt und durch Segmente, welche mit Federn verbunden sind, gebildet wird. Hierzu weisen die Federn eine zunehmende Federsteifigkeit vom Sammelraum in Richtung Ansaugrohr auf. Durch Ziehen an einem Ende der Verstelleinheit werden die Federn gedehnt. Die Feder mit der geringsten Federsteifigkeit dehnt sich zuerst. Dadurch entfernen sich die Segmente voneinander und die Ansaugkanäle erhalten in diesem Bereich eine luftdurchlässige Verbindungsstelle. Je größer die Kraft mit der an der Verstelleinheit gezogen wird, desto mehr Segmente geben eine luftdurchlässige Verbindungsstelle frei. Da durch diese Verbindungsstellen Luft treten kann, verkürzt sich die effektive Ansaugkanallänge auf den Bereich, in welchem die Segmente dicht aneinander anschließen. Die Berührungsstellen der einzelnen Segmente können unterschiedlich ausgeprägt sein. Die Segmente können stumpf aufeinander treffen, wobei eine ausreichende Abdichtung der einzelnen Ansaugkanäle voneinander gewährleistet sein muß, eine weitere Möglichkeit stellt die Verwendung von teleskopartig aufgebauten Segmenten dar, die ineinander geführt sind und beim Öffnen Durchbrechungen aufweisen, durch welche ein Kurzschließen der Ansaugkanäle erfolgt.

Gemäß einer weiteren Ausgestaltung der Erfindung sind die Ansaugkanäle axial durch eine Dichtung voneinander getrennt, wodurch eine bessere Aufladung der Zylinder zustande kommt. Die Dichtung kann in Form eines Dichtkäfigs, der mehrere Dichtflächen umfaßt, oder als Einlegeteil für einzelne Dichtflächen ausgebildet sein. Eine eingelegte Dichtung kann sowohl in die Verstelleinheit als auch in den Sammelbehälter eingebracht werden.

Eine vorteilhafte und kostengünstige Variante ist die Fertigung des Sammelbehälters im Kunststoffspritzgußverfahren. Hierbei sind Krümmungen realisierbar, wobei die Entformbarkeit der Teile beachtet werden muß. Bei aufwendigen Formen kann der Sammelbehälter mehrere Teile aufweisen, welche anschließend dichtend miteinander verschweißt werden.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Weitere Einzelheiten der Erfindung werden in den Zeichnungen anhand von schematischen Ausführungsbeispielen beschrieben.

Hierbei zeigt
- Figur 1: eine Ansaugvorrichtung im Schnitt
- Figur 2: die Ansaugvorrichtung im Schnitt entlang der Schnittlinie I-I gemäß Figur 1
- Figur 3: die Ansaugvorrichtung im Schnitt entlang der Schnittlinie I-I gemäß Figur 1 mit einer Variante zur Abdichtung der Ansaugkanäle untereinander
- Figur 4: eine Ansaugvorrichtung im Schnitt.

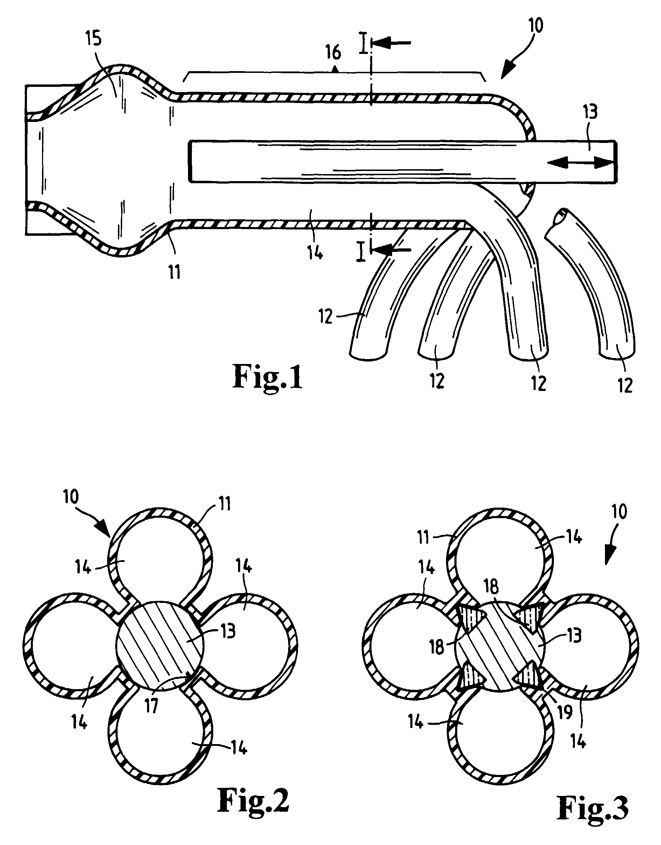

In Figur 1 ist eine Ansaugvorrichtung 10 im Schnitt dargestellt. Diese Ansaugvorrichtung 10 weist einen Sammelbehälter 11, Ansaugrohre 12 und eine Verstelleinheit 13 auf. Jedes Ansaugrohr 12 ist mit einem Ansaugkanal 14 verbunden, welcher von dem Sammelbehälter 11 in Verbindung mit der Verstelleinheit 13 gebildet wird. Der Sammelbehälter umschließt einen Sammelraum 15, der direkt in die Ansaugkanäle 14 übergeht. Um für unterschiedliche Drehzahlen einer Brennkraftmaschine immer optimale Ansaugkanallängen 16 zu erzeugen, kann die Verstelleinheit 13 translatorisch verschoben werden. Durch teilweises Herausziehen der Verstelleinheit 13 aus dem Sammelbehälter 11 vergrößert sich der Sammelraum 15 und verringert sich die Ansaugkanallänge 16. Durch Einschieben der Verstelleinheit 13 verringert sich der Sammelraum 15 und vergrößert sich die Ansaugkanallänge 16.

In Figur 2 ist die Ansaugvorrichtung 10 im Schnitt gemäß Schnittlinie I-I aus Figur 1 dargestellt. Die Ansaugkanäle 14 sind 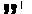 kleeblattförmig" um die Verstelleinheit 13 angeordnet. Der Sammelbehälter 11 bildet die äußere Begrenzung und die Verstelleinheit 13 die innere Begrenzung der Ansaugkanäle 14. Der Sammelbehälter 11 bildet mit der Verstelleinheit 13 eine Kontaktfläche 17, welche eine ausreichende Abdichtung der Ansaugkanäle 14 gegeneinander bewirkt.

In Figur 3 ist die Ansaugvorrichtung im Schnitt entlang der Schnittlinie I-I gemäß Figur 1 in einer Variante zur Abdichtung der Ansaugkanäle 14 mittels Dichtungen 18 dargestellt. Diese Dichtungen 18 sind in die Verstelleinheit 13 dichtend eingebracht und weisen eine Dichtkante 19 auf, welche in dem Sammelbehälter 11 dichtend geführt ist.

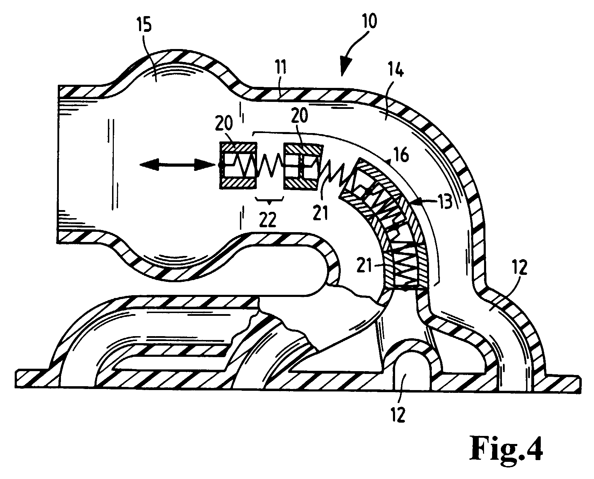

In Figur 4 ist eine Ansaugvorrichtung 10 im Schnitt dargestellt, welche einen Sammelbehälter 11 mit einem Sammelraum 15, einer Verstelleinheit 13 und an die Ansaugkanäle 14 anschließenden Ansaugrohre 12 aufweist. Die Verstelleinheit 13 wird durch Segmente 20, welche durch Federn 21 verbunden sind, gebildet. Die Federsteifigkeit nimmt vom Sammelraum 15 in Richtung Ansaugrohre 12 zu. Durch diesen Aufbau, dehnen sich zuerst die Federn mit der geringeren Federkonstante und geben Verbindungsstellen 22 zwischen den einzelnen Ansaugkanälen frei. Durch diese Verbindungsstellen 22 tritt Luft und verkürzt somit die effektive Ansaugkanallänge 16. Je stärker gezogen wird, desto mehr Verbindungsstellen 22 werden geöffnet und die Ansaugkanallänge 16 verkürzt. Die Federn 21 sind mit Vorspannung zwischen die Segmente 20 eingebracht, dadurch wird sichergestellt, daß die Segmente 20 im entlasteten Zustand dichtend aneinander anschließen und nach dem Auseinanderziehen wieder dichtend zusammengeführt werden. Der Sammelbehälter 11 ist so ausgebildet, daß die Segmente 20 geführt werden und keine Leckage von einem Ansaugkanal 14 zum Anderen stattfinden kann.

## Patentansprüche

1. Ansaugvorrichtung (10), enthaltend einen Sammelbehälter (11), mindestens einen Ansaugkanal (14), ebensoviele Ansaugrohre (12), die jeweils mit einem Ansaugkanal (14) verbunden sind und eine Verstelleinheit (13), **dadurch gekennzeichnet**, daß die Verstelleinheit (13) in den Sammelbehälter (11) hineinragt, wobei der Sammelbehälter (11), der Ansaugkanal (14) und die Verstelleinheit (13) achsparallel angeordnet sind, und daß der Ansaugkanal (14) durch den Sammelbehälter (11) und die Verstelleinheit (13) gebildet ist.

2. Ansaugvorrichtung (10) nach Anspruch 1, dadurch gekennzeichnet, daß die Verstelleinheit (13) verschiebbar ist.

3. Ansaugvorrichtung (10) nach Anspruch 2, dadurch gekennzeichnet, daß die Verstelleinheit (13) translatorisch verschiebbar ist.

4. Ansaugvorrichtung (10) nach einem der vorangehenden Ansprüche, dadurch gekennzeichnet, daß die Ansaugkanäle (14) 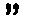 kleeblattförmig" angeordnet sind.

5. Ansaugvorrichtung (10) nach einem der vorangehenden Ansprüche, dadurch gekennzeichnet, daß die Verstelleinheit (13) durch Segmente gebildet wird, welche beweglich miteinander verbunden sind, insbesondere durch Federn.

6. Ansaugvorrichtung (10) nach Anspruch 5, dadurch gekennzeichnet, daß die Steifigkeit der Federn vom Sammelraum (15) in Richtung Ansaugrohr (12) zunimmt.

7. Ansaugvorrichtung (10) nach einem der vorangehenden Ansprüche, dadurch gekennzeichnet, daß die Ansaugkanäle (14) durch eine Dichtung (18) voneinander abgedichtet sind.

8. Ansaugvorrichtung (10) nach Anspruch 7, dadurch gekennzeichnet, daß die Verstelleinheit (13) Dichtungen (18) in Achsrichtung enthält.

9. Ansaugvorrichtung (10) nach Anspruch 7 , dadurch gekennzeichnet, daß der Sammelbehälter (11) Dichtungen (18) in Achsrichtung enthält.

10. Ansaugvorrichtung (10) nach einem der vorangehenden Ansprüche, dadurch gekennzeichnet, daß der Sammelbehälter (11) aus Kunststoff gespritzt ist.
